# EUROPÄISCHE PATENTSCHRIFT

(11) **EP 0 607 750 B1**
(45) Veröffentlichungstag und Bekanntmachung des Hinweises auf die Patenterteilung: **19.11.1997**
(21) Anmeldenummer: 93810045.0
(22) Anmeldetag: 22.01.1993
(51) Int. Cl.: F17C 5/06, F16K 11/074

(54) **Anlage zum Betanken eines mobilen Druckbehälters mit einem gasförmigen Kraftstoff und Verfahren zum Betrieb einer derartigen Anlage**
Filling device for a mobile pressure vessel with a gaseous fuel and process for operating such a device
Dispositif de ravitaillement d'un réservoir mobile sous pression à combustible gazeux et procédé pour mettre en oeuvre un tel dispositif

(43) Veröffentlichungstag der Anmeldung: 27.07.1994
(73) Patentinhaber: Maschinenfabrik Sulzer-Burckhardt AG, CH-4002 Basel (CH)
(72) Erfinder: Mutter, Heinz, CH-8400 Winterthur (CH)
(74) Vertreter: Trieblnig, Adolf

(56) Entgegenhaltungen:
- US-A- 3 719 196
- US-A- 4 156 437
- A.J.ZWEMMER 'Factors influencing the use of CNG as an automotive fuel' 1986 , SULZER BURCKHARDT , BASEL (SCHWEIZ) Abschnitt 7 (vollständig)

## Beschreibung

Die Erfindung betrifft eine Anlage zum Betanken eines mobilen Druckbehälters, insbesondere eines Kraftstofftanks eines Fahrzeugs, mit einem gasförmigen Kraftstoff, insbesondere Erdgas, mit mindestens zwei Zwischenspeichern, in denen der Kraftstoff mit unterschiedlichen Speicherdrücken speicherbar ist, und einer Zuteileinrichtung, durch welche eine mit dem Druckbehälter kuppelbare Betankungsvorrichtung in einer vorbestimmten Reihenfolge, beginnend mit dem den niedrigsten Speicherdruck aufweisenden Zwischenspeicher, jeweils an einen der Zwischenspeicher anschliessbar ist.

Ferner betrifft die Erfindung ein Verfahren zum Betrieb einer derartigen Anlage.

Eine aus der SULZER-BURCKHARDT-Druckschrift "Factors influencing the use of CNG as an automotive fuel", 1986, bekannte Anlage der genannten Art enthält drei Gruppen von Zwischenspeichern, die über einen an eine Erdgasleitung angeschlossenen Hochdruckkompressor gespeist werden, wobei das Erdgas in den Zwischenspeichern aller drei Gruppen auf einen Speicherdruck von z.B. 250 bar verdichtet wird. Die Zwischenspeichergruppen werden jeweils entsprechend einer vorbestimmten Prioritätenfolge mit der Betankungsvorrichtung verbunden, wobei die Speicherdrücke der einzelnen Gruppen unterschiedlich schnell abnehmen. Die Zuteileinrichtung der bekannten Anlage enthält drei über einen Prozessor ansteuerbare elektromagnetische Steuerventile, über welche jeweils eine der Zwischenspeichergruppen mit der Betankungsvorrichtung verbindbar ist. Beim Beginn eines Betankungsvorganges wird über den Prozessor jeweils zunächst das der Gruppe der Zwischenspeicher mit dem niedrigsten Speicherdruck zugeordnete erste Steuerventil geöffnet. Wenn im zu betankenden Druckbehälter und in den Zwischenspeichern dieser ersten Gruppe der gleiche Druck herrscht, wird das erste Steuerventil geschlossen und das der Gruppe der Zwischenspeicher mit einem mittleren Speicherdruck zugeordnete zweite Steuerventil geöffnet. Wenn im Druckbehälter und in den Zwischenspeichern dieser zweiten Gruppe der gleiche Druck herrscht, wird das zweite Steuerventil geschlossen und das der Gruppe der Zwischenspeicher mit dem höchsten Speicherdruck zugeordnete dritte Steuerventil geöffnet. Wenn im Druckbehälter ein vorbestimmter Betankungsdruck erreicht ist, wird das dritte Steuerventil geschlossen und der Betankungsvorgang beendet. Die je für sich anzusteuernden, für hohe Drücke auszulegenden elektromagnetischen Steuerventile der bekannten Zuteileinrichtung erfordern eine relativ aufwendige, mehrteilige Steueranordnung. Zudem kann bei tiefen Umgebungstemperaturen sowie durch Feuchtigkeit die Funktionsfähigkeit derartiger Steuerventile beeinträchtigt werden.

Ein elektromagentisches Steuerventil einer anderen Gattung ist aus dem Dokument US-A-4 156 437 bekannt. Das bekannte, zur Verwendung an einem Analysegerät bestimmte Steuerventil enthält mehrere, je an eine Zuführleitung für eine Gas- oder Flüssigkeitsprobe anschliessbare Eingänge, einen an das Analysegerät, z.B. ein Massenspektrometer, anschliessbaren ersten Ausgang und einen an eine Abführleitung anschliessbaren zweiten Ausgang sowie einen zyklisch verstellbaren Ventilkörper, der jeweils einen der Eingänge mit dem ersten Ausgang verbindet. Zum Verstellen des Ventilkörpers von einem Eingang zu einem anderen Eingang wird der Ventilkörper jeweils durch einen gegen eine Feder wirkenden Elektromagneten von der die Eingänge enthaltenden Grundfläche abgehoben, mit einem Motor gekuppelt und über einen neuen Eingang geschwenkt, worauf der Elektromagnet abgechaltet und der Ventilkörper unter der Wirkung der Feder vom Motor entkuppelt und gegen die Grundfläche gepresst wird. Alle übrigen Eingänge bleiben offen und sind ständig in Verbindung mit dem zweiten Ausgang, durch den jeweils im Innenraum des Gehäuses sich ansammelnde Fluide aus den nicht gewählten Eingängen in jeder Position des Ventilkörpers aus dem Gehäuse abgeführt werden sollen. Das bekannte, insbesondere für medizinische Einrichtungen vorgesehene, zum Auswählen kleiner Gasmengen bestimmte Steuerventil ist für einen Anschluss an ständig unter hohen, unterschiedlichen Speicherdrücken stehende Speiseleitungen, und damit zur Steuerung einer Betankungsanlage der eingangs genannten Art nicht geeignet.

Der Erfindung liegt die Aufgabe zugrunde, eine weiterentwickelte Anlage der eingangs genannten Art mit einer vereinfachten Zuteileinrichtung in einer robusten, kompakten Bauweise zu schaffen, welche einen geringen Wartungsaufwand erfordert und welche auch unter ungünstigen Umgebungseinflüssen eine hohe Betriebsbereitschaft und eine rasche Betankung des mobilen Druckbehälters gewährleistet.

Diese Aufgabe wird gemäss der Erfindung durch die im kennzeichnenden Teil des Patentanspruchs 1 angegebenen Merkmale gelöst.

Das erfindungsgemässe Verfahren zum Betrieb der Anlage ist Gegenstand des Patentanspruchs 8.

Die erfindungsgemäss ausgebildete Anlage ermöglicht kurze Betankungszeiten und gestattet eine zwangläufige Steuerung des Betankungsvorganges nach einem immer gleichen zyklischen Ladeprogramm durch einfache Mittel, die sich durch eine geringe Störanfälligkeit auszeichnen.

Durch das erfindungsgemässe Verfahren wird sichergestellt, dass die Zuteileinrichtung nach jedem Betankungsvorgang in die erste Sperrstellung zurückgestellt wird, die der für den nächsten Betankungsvorgang zwangläufig vorgesehenen Ausgangsstellung entspricht.

Ausgestaltungen des Erfindungsgegenstandes sind in den abhängigen Patentansprüchen angegeben.

Weitere Einzelheiten ergeben sich aus der folgenden Beschreibung von in der Zeichnung schematisch dargestellten Ausführungsbeispielen der Erfindung, in Verbindung mit den Patentansprüchen. In der Zeichnung zeigen:
- Fig. 1: eine erfindungsgemäss ausgebildete Anlage zum Betanken eines Kraftfahrzeuges;
- Fig. 2: eine Einzelheit der Anlage nach Fig. 1 in einem Längsschnitt;
- Fig. 3: den Schnitt III-III aus Fig. 2;
- Fig. 4: eine Einzelheit einer erfindungsgemäss ausgebildeten Anlage in einer abgewandelten Ausführungsform, in einer der Fig. 2 entsprechenden Teilansicht mit Teilschnitt;
- Fig. 5: eine Einzelheit einer erfindungsgemäss ausgebildeten Anlage in einer abgewandelten Ausführungsform, in einer der Fig. 3 entsprechenden Darstellung;
- Fig. 6: eine weitere Einzelheit der erfindungsgemäss ausgebildeten Anlage in einer abgewandelten Ausführungsform.

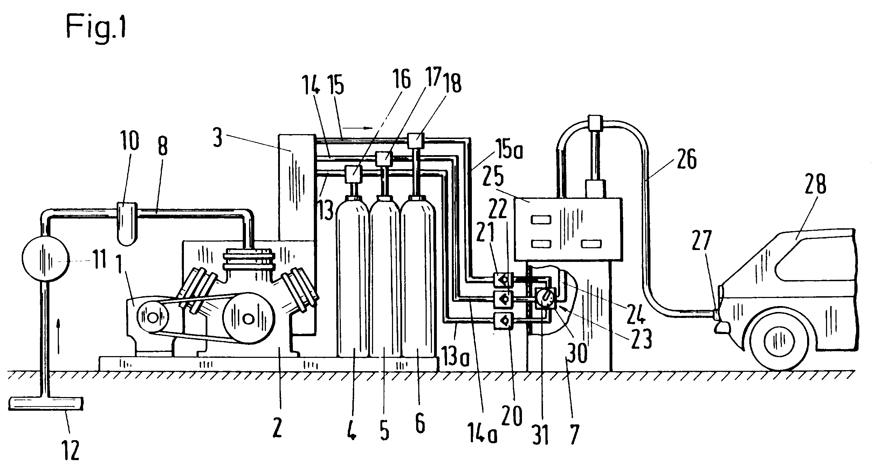

Die Anlage nach Fig. 1 enthält einen über einen Motor 1 antreibbaren Hochdruckkompressor 2, eine Verteileinheit 3 und eine Anzahl Zwischenspeicher 4, 5 und 6 sowie eine Betankungseinrichtung 7. Der Kompressor 2, der in beliebiger Baubart ausgeführt sein kann, ist saugseitig über eine Saugleitung 8, die ein Ansaugfilter 10 und einen Gasmesser 11 enthält, an eine Quelle eines Gasbrennstoffs, beim dargestellten Beispiel eine Erdgasleitung 12, angeschlossen. Die Druckseite des Kompressors 2 ist über eine nicht dargestellte Verbindung an die Verteileinheit 3 angeschlossen, welche über Speiseleitungen 13, 14 und 15 und Ventile 16, 17 und 18 mit je einem der Zwischenspeicher 4 bzw. 5 bzw. 6 verbunden sind. Abweichend von der vereinfachten Darstellung nach Fig. 1 können die Speiseleitungen 14, 15 und 16 auch je mit einer Gruppe von mehreren, z.B. 10 bis 20 zueinander parallel geschalteten Zwischenspeichern 4 bzw. 5 bzw. 6 verbunden sein. Gemäss Fig. 1 sind die Zwischenspeicher 4, 5 und 6 - oder entsprechende Gruppen von Zwischenspeichern - über die auf unterschiedliche Ausgangsdrücke einstellbaren Ventile 16, 17 und 18 mit Zuführleitungen 13a, 14a und 15a verbunden, welche je mit einem Rückschlagventil 20 bzw. 21 bzw. 22 versehen und an eine in der Betankungseinrichtung 7 angeodnete Zuteileinrichtung 23 angeschlossen sind. Die Zuteileinrichtung 23 ist über eine Austrittsleitung 24 und einen nicht dargestellten Durchflussmesser, dessen Anzeige auf eine Anzeigetafel 7a übertragbar ist, mit einem Betankungsschlauch 26 verbunden, der über ein Anschlussstück 27 mit einem Füllstutzen eines Kraftstofftanks eines Kraftfahrzeuges 28 kuppelbar ist.

Das durch die Erdgasleitung 12 zugeführte Erdgas, welches in der Regel einen Druck von z.B. 20 mbar aufweist, wird durch den im Dauerbetrieb oder zeitweise, z. B. mittels Nachtstrom, betriebenen Kompressor 2 über die Verteileinheit 3 den Zwischenspeichern 4, 5 und 6 - bzw. entsprechenden Gruppen von Zwischenspeichern - zugeführt und auf einen Speicherdruck von z.B. 250 bar verdichtet, der während der Betankungsvorgänge in den Zwischenspeichern 4, 5 und 6 unterschiedlich schnell abnimmt. Durch die Ventile 16 und 17 werden die Speicherdrücke der Zwischenspeicher 4 und 5 je auf einen Wert von ca. 150 bar bzw. ca. 180 bar reduziert. Beim Beginn eines Betankungsvorgangs wird über die Zuteileinrichtung 23 jeweils zunächst die an den Zwischenspeicher 4 mit dem niedrigsten Speicherdruck angeschlossene Zuführleitung 13a mit der Austrittsleitung 24 verbunden. Nach Erreichen eines diesem Speicherdruck entsprechenden Betankungsdrucks im Druckbehälter des Kraftfahrzeugs 28 wird die an den Zwischenspeicher 5 angeschlossene Zuführleitung 14a mit der Austrittsleitung 24 verbunden, und in entsprechender Weise wird nach Erreichen eines dem mittleren Speicherdruck entsprechenden Betankungsdrucks die an den Zwischenspeicher 6 angeschlossene Zuführleitung 15a mit der Austrittsleitung 24 verbunden. Nach Erreichen des dem höchsten Speicherdruck oder einem anderen vorbestimmten Höchstwert entsprechenden Betankungsdrucks, oder aufgrund eines auf andere Weise, z.B. in Abhängigkeit von der bezogenen Gasmenge ausgelösten Schaltsignals einer den Betankungsvorgang überwachenden Einrichtung, kann die Verbindung zwischen der Zuführleitung 15a und der Austrittsleitung 24 unterbrochen und der Betankungsvorgang beendet werden. Es versteht sich, dass auch zu jedem anderen Zeitpunkt die Verbindung zwischen einer der Zuführleitungen 14a, 15a und 16a mit der Austrittsleitung 24 unterbrochen und dementsprechend der Betankungsvorgang beendet werden kann.

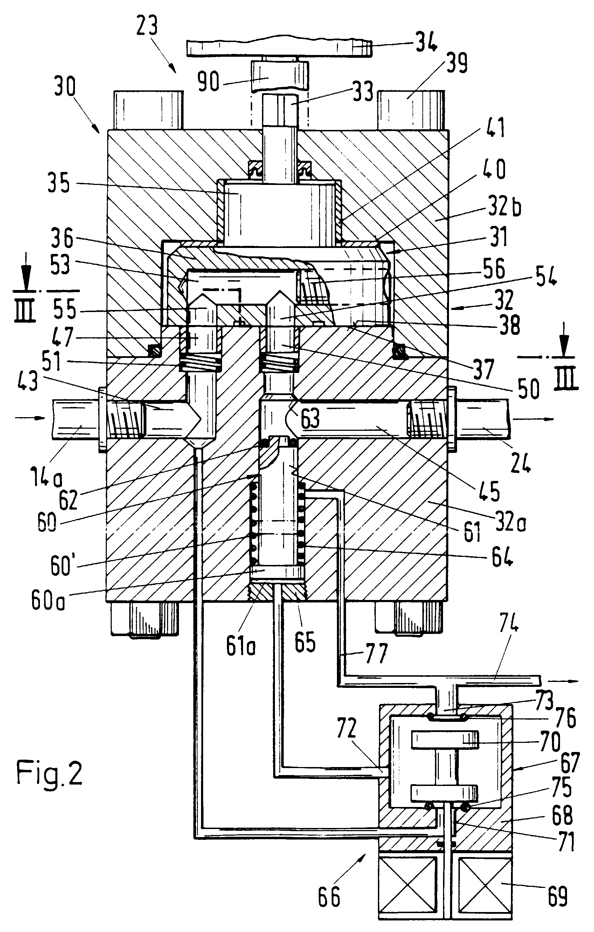

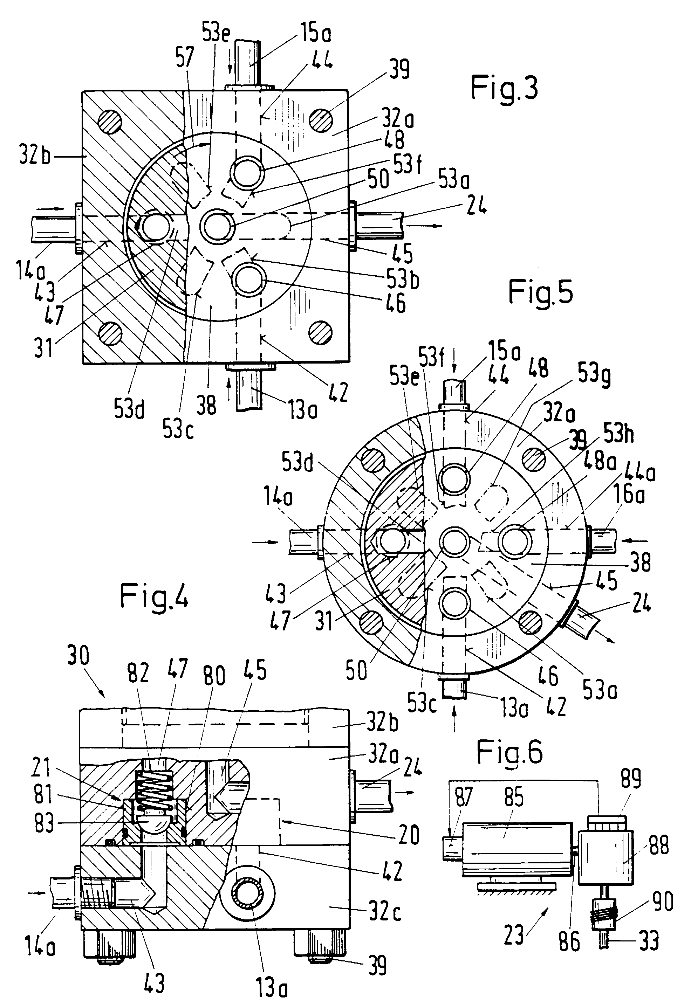

Die Zuteileinrichtung 23, welche in den Fig. 2 und 3 in einem grösseren Massstab dargestellt ist, enthält ein Ladeventil 30 mit einem Ventilkörper 31, der in einem gegen die Umgebung abgedichten Gehäuse 32 angeordnet und über eine Welle 33 mit einer Antriebseinrichtung 34, z.B. einem Schrittmotor, kuppelbar ist. Das Gehäuse 32 weist zwei Gehäuseteile 32a und 32b auf, welche mittels Schrauben 39 miteinander dichtend verbunden sind. Der Ventilkörper 31 enthält über über die Welle 33 verschwenkbares Schwenkstück in Form einer mit einem zylindrischen Ansatz 35 versehenen Drehscheibe 36, welche über eine durchgehende ringförmige Lauffläche 37 auf einer am einen Gehäuseteil 32a ausgebildeten Sitzfläche 38 abgestützt und in einer im anderen Gehäuseteil 32b ausgebildeten Ausnehmung über eine axiale und radiale Kräfte aufnehmende Lageranordnung 40, 41 endlos durchdrehbar gelagert ist.

Der Gehäuseteil 32a ist als Verteilblock ausgebildet, welche drei je an eine der Zuführleitungen 13a, 14a und 15a angeschlossene Eingänge 42, 43 bzw. 44 und einen an die Austrittsleitung 24 angeschlossenen Ausgang 45 aufweist. In der Sitzfläche 38 des Gehäuseteils 32a sind drei auf einem Kreis gegeneinander versetzt angeordnete, je mit einem der Eingänge 42, 43 und 44 verbundene periphere Druckanschlüsse 46, 47 bzw. 48 und ein zentral angeordneter, mit dem Ausgang 45 verbundener Druckanschluss 50 vorgesehen. Die Druckanschlüsse 46, 47, 48 und 50 sind je in Form eines Dichtungsrings ausgebildet, der in einer Bohrung des Gehäuseteils 32a angeordnet ist und der unter der Wirkung eines Federelementes 51 dichtend an die Lauffläche 37 der Drehscheibe 36 anliegt. Die Drehscheibe 36 ist mit einem geschlossenen radialen Verbindungskanal 53 ausgeführt, der eine mit dem Druckanschluss 50 fluchtende zentrale Anschlussbohrung 54 mit einer auf dem Radius der Druckanschlüsse 46, 47 und 48 angebrachten peripheren Uebernahmebohrung 55 verbindet. Der Verbindungskanal 53 kann darstellungsgemäss durch eine mittels einer Schraube 56 verschliessbare Bohrung gebildet sein.

Im Gehäuseteil 32a ist ferner ein zweiter Ventilkörper 60 angeordnet, der kolbenförmig ausgebildet und in einer mit dem Ausgang 45 verbundenen Bohrung 61 dichtend geführt ist. Der Ventilkörper 60 ist zwischen einer in der Fig. 2 dargestellten, den Ausgang 45 freigebenden Offenstellung und einer die Verbindung zwischen dem zentralen Druckanschluss 50 und dem Ausgang 45 sperrenden Sperrstellung 60' verstellbar, in welcher der Ventilkörper 60 mit einem an seiner Kopfpartie angeordneten Dichtungsring 62 an einen in der Bohrung 61 zwischen dem Druckanschluss 50 und dem Ausgang 45 ausgebildeten Ventilsitz 63 anliegt. Der Ventilkörper 60 wird unter der Wirkung einer Feder 64 gegen einen in die Bohrung 61 einschraubbaren Verschlussteil 65 verspannt gehalten, der mit einer ihm zugekehrten, in der Bohrung 61 dichtend geführten Endpartie 60a des Ventilkörpers 60 einen Zylinderraum 61a begrenzt.

Zur Betätigung des zweiten Ventilkörpers 60 ist eine von der Antriebseinrichtung 34 des Ladeventils 30 unabhängig aktivierbare Stelleinrichtung 66 vorgesehen, welche ein Steuerventil 67 mit einem Ventilgehäuse 68 und einem über einen Anker eines Elektromagneten 69 beweglichen dritten Ventilkörper 70 enthält. Das Ventilgehäuse 68 ist mit einem Eingang 71, einem ersten Ausgang 72 und einem zweiten Ausgang 73 ausgeführt. Der Eingang 71 ist einer dem Elektromagneten 69 zugekehrten Kolbenfläche des Ventilkörpers 70 zugeordnet und mit einem der Eingänge 42, 43 bzw. 44 des Ladeventils 30, darstellungsgemäss mit dem Eingang 43, verbunden. Der erste Ausgang 72 ist mit dem Zylinderraum 61a verbunden, während der zweite Ausgang 73 einer dem Elektromagneten 69 abgekehrten Kolbenfläche des Ventilkörpers 70 zugeordnet und mit einer von der Betankungsanlage wegführenden Abströmleitung 74 verbunden ist. An die Abströmleitung 74 kann dargestellungsgemäss eine Entlüftungsleitung 77 angeschlossen sein, welche mit dem die Feder 64 enthaltenden Abschnitt der Bohrung 61 verbunden ist. Die Ausgänge 71 und 73 sind je von einem Dichtungsring 75 bzw. 76 umgeben.

In der Fig. 3 sind fünf mit strichpunktierten Linien dargestellte Winkelstellungen und eine mit vollen Linien dargestellte Winkelstellung 53d des Verbindungskanals 53 der Drehscheibe 36 angedeutet, von denen die Winkelstellungen 53a, 53c und 53e je einer ersten, einer zweiten und einer dritten Sperrstellung des Ventilkörpers 31 des Ladeventils 30 entsprechen, in der die peripheren Druckanschlüsse 46, 47 und 48 gesperrt sind. Die Winkelstellungen 53b, 53d und 53f entsprechen je einer ersten, einer zweiten und einer dritten Durchflussstellung des Ventilköpers 31, in der jeweils einer der Druckanschlüsse 46, 47 bzw. 48 mit dem zentralen Druckanschluss 50 verbunden ist.

Beim Beginn eines z.B. drei Minuten dauernden Betankungsvorgangs wird der Ventilkörper 31 jeweils aus der beim vorangegangenen Betankungsvorgang erreichten, der Winkelstellung 53a entsprechenden ersten Sperrstellung gemäss Pfeil 57 in die dem Eingang 42 zugeordnete erste Durchflussstellung verschwenkt und beim Erreichen des dem Speicherdruck des Zwischenspeichers 4 entsprechenden Betankungsdrucks über die der Winkelstellung 53c entsprechende zweite Sperrstellung in die dem Eingang 43 zugeordnete zweite Durchflussstellung verschwenkt. Hierauf wird in entsprechender Weise der Ventilkörper 31 über die der Winkelstellung 53e entsprechende dritte Sperrstellung in die dem Eingang 44 zugeordnete dritte Durchflussstellung verschwenkt und schliesslich, beim Erreichen des vorbestimmten höchsten Betankungsdrucks, im gleichen Drehsinn in die der Winkelstellung 53a entsprechende erste Sperrstellung weitergeschwenkt.

Beim Verschwenken des Ventilkörpers 31 in eine bzw. aus einer der Durchflussstellungen kann aufgrund der zunehmenden bzw. abnehmenden Ueberdeckung der durchströmbaren Querschnitte der Uebernahmebohrung 55 des Ventilkörpers 31 und des betreffenden Druckanschlusses jeweils eine entsprechend dosierbare Freigabe bzw. Drosselung der Strömung erzielt werden.

Entsprechend der Darstellung nach Fig. 2 wird während des Betankungsvorgangs der zweite Ventilkörper 60 in Offenstellung gehalten, und der Ventilkörper 70 des Steuerventils 67 wird durch den unter normalen Betriebsbedingungen erregten Elektromagneten 69 gegen den im Eingang 71 herrschenden Druck des das Ladeventil 30 durchströmenden Gases in der dargestellten, den Eingang 71 verschliessenden Hubstellung an den Dichtungsring 75 angepresst. Bei einem Stromausfall wird der Ventilkörper 70 freigegeben und durch das den Eingang 71 durchströmende Gas in eine den zweiten Ausgang 73 verschliessende Hubstellung bewegt und an den Dichtungsring 76 angepresst. Entsprechend wird über den ersten Ausgang 72 der an das Gehäuse 78 angeschlossene Zylinderraum 61a durch das Gas beaufschlagt, so dass der Ventilkörper 60 aus der dargestellten Offenstellung in die mit strichpunktierten Linien angedeutete, den Ausgang 45 sperrende Sperrstellung 60' bewegt und in dieser gehalten wird. Wenn der Stromausfall behoben ist, wird der Ventilkörper 70 des Steuerventils 67 durch den entsprechend wieder erregten Elektromagneten 69 in die dargestellte Hubstellung zurückbewegt, wobei der Eingang 71 geschlossen wird, das im Gehäuse 68 und im Zylinderraum 61a befindliche Gas über den Ausgang 73 in die Abströmleitung 74 abgeführt wird und der Ventilkörper 60 in die dargestellte Offenstellung zurückgeführt wird, welche die Fortsetzung des durch den Stromausfall unterbrochenen Betankungsvorgangs gestattet. Durch die beschriebene Anordnung wird sichergestellt, dass bei einem Stromausfall der Betankungsvorgang unterbrochen und eine unkontrollierte Gaszufuhr durch das Ladeventil 30 verhindert wird.

Wie aus der Fig. 4 hervorgeht, können die den Zuführleitungen 13a, 14a und 15a zugeordneten Rückschlagventile 20, 21 und 22 auch im Gehäuse 31 des Ladeventils 30 angeordnet sein. Bei der dargestellten Ausführungsform sind die Rückschlagventile in den mit den Druckanschlüssen 46, 47 und 48 verbundenen Bohrungen 80 des Gehäuseteils 32a angeordnet, wobei die Eingänge 42, 43 und 44 in einem mit dem Gehäuseteil 32a lösbar verbundenen dritten Gehäuseteil 32c ausgbildet sind. Die Rückschlagventile 20, 21 und 22, welche in beliebiger Bauweise ausgeführt sein können, weisen in der Darstellung nach Fig. 4 je eine in der betreffenden Bohrung 80 dichtend angeordnete, mit einem Ventilsitz versehene Hülse 81 und einen durch eine Feder 82 belasteten kugelförmigen Ventilkörper 83 auf. Die beschriebene Ausführung ermöglicht eine kompakte, gegen die Umgebung abgeschlossene Bauweise der Zuteileinrichtung, welche als zusammenhängender Bauteil mit entsprechend geringem Montageaufwand ein- und ausgebaut werden kann und welche einen geringen Wartungsaufwand erfordert.

Anstelle der vorstehend beschriebenen Ausführungen mit drei Eingängen ist auch ein Ladeventil 30 mit zwei Eingängen oder, wie in Fig. 5 dargestellt, mit vier je an einen Zwischenspeicher bzw. eine Gruppe von Zwischenspeichern anschliessbaren Eingängen 42, 43, 44 und 44a möglich, wobei dementsprechend vier Druckanschlüsse 46, 47, 48 bzw. 48a vorgesehen sind, und der Ventilkörper 31 zwischen vier den Winkelstellungen 53a, 53c, 53e und 53g entsprechenden Sperrstellungen und vier Durchflussstellungen verstellbar ist. Es sind auch Ausführungen mit einer grösseren Anzahl Eingängen möglich, wobei die Abstände zwischen den peripheren Druckanschlüssen je mindestens gleich dem Durchmesser der in der Drehscheibe ausgebildeten Uebernahmebohrung sein müssen, um sicherzustellen, dass beim zyklischen Verstellen des Ventilkörpers auf jede Durchflussstellung jeweils eine Sperrstellung folgt.

Gemäss Fig. 6 kann die Antriebseinrichtung 23 des Ladeventils 30 einen Asynchronmotor 85 enthalten, der über ein Untersetzungsgetriebe 88, z.B. ein Schneckengetriebe, und eine drehsteife Kupplung 90 mit der Antriebswelle 33 des Ventilkörpers 31 kuppelbar ist. Darstellungsgemäss kann der Asynchronmotor 85 mit einer auf seine Welle 86 wirkenden Bremse 87 versehen sein, die in Abhängigkeit von einem die Winkelstellung der Antriebswelle 33 erfassenden Winkel-Encoders 89 betätigbar ist, wodurch jeweils eine genaue Positionierung des Ventilkörpers 31 erzielt werden kann. Diese Ausführung stellt eine kostengünstigere Variante zu einer Ausführung mit einem Schrittmotor dar und ergibt eine Antriebseinrichtung in einer einfachen Bauweise. Ein Vorteil des verwendeten Asynchronmotors 85 besteht darin, dass er direkt an das Wechselstromnetz angeschlossen werden kann.

## Patentansprüche

1. Anlage zum Betanken eines mobilen Druckbehälters, insbesondere eines Kraftstofftanks eines Fahrzeuges, mit einem gasförmigen Kraftstoff, insbesondere Erdgas, mit mindestens zwei Zwischenspeichern (4, 5, 6), in denen der Kraftstoff mit unterschiedlichen Speicherdrücken speicherbar ist, und einer Zuteileinrichtung (23, durch welche eine mit dem Druckbehälter kuppelbare Betankungsvorrichtung (7) in einer vorbestimmten Reihenfolge, beginnend mit dem den niedrigsten Speicherdruck aufweisenden Zwischenspeicher (4), jeweils an einen der Zwischenspeicher (4, 5, 6) anschliessbar ist, dadurch gekennzeichnet, dass die Zuteileinrichtung (23) ein Ladeventil (30) enthält, welches ein gegen die Umgebung abgedichtetes Gehäuse (32) mit mindestens zwei je mit einem der Zwischenspeicher (4, 5, 6) verbundenen Eingängen (42, 43 bzw. 44, 44a) und einem mit der Betankungsvorrichtung (7) verbundenen Ausgang (45) sowie einen über eine Antriebseinrichtung (34) zyklisch verstellbaren Ventilkörper (31) aufweist, der im Gehäuse (32) zwischen einer Sitzfläche (38) und einer axiale Kräfte aufnehmenden Lageranordnung (40) gehalten ist, und der jeweils in einem bestimmten Drehsinn (Pfeil 57) über eine die Eingänge (42, 43, 44; 44a) schliessende, erste Sperrstellung in eine dem Zwischenspeicher (4) mit dem niedrigsten Speicherdruck zugeordnete, eine Verbindung zwischen dem betreffenden Eingang (42) und dem Ausgang (45) zulassende erste Durchflussstellung, und im gleichen Drehsinn (Pfeil 57) jeweils über eine weitere Sperrstellung in eine dem Zwischenspeicher (6) mit dem nächsthöheren Speicherdruck zugeordnete weitere Durchflussstellung sowie im gleichen Drehsinn aus der dem Zwischenspeicher mit dem höchsten Speicherdruck zugeordneten Durchflussstellung in die erste Sperrstellung umschaltbar ist.

2. Anlage nach Anspruch 1, dadurch gekennzeichnet, dass das Ladeventil (30) als Ventilkörper (31) ein im Gehäuse (32) um eine Drehachse schwenkbar gelagertes, von aussen betätigbares Schwenkstück in Form einer endlos durchdrehbaren Drehscheibe (36) enthält, welche eine durchgehende ringförmige Lauffläche (37) zu an diese dichtend anliegenden, im Gehäuse (32) auf einem Kreis angeordneten, je einem der Eingänge (42, 43, 44; 44a) des Ladeventils (30) zugeordneten peripheren Druckanschlüssen (46, 47, 48; 48a) aufweist, und welche mit einem geschlossenen Verbindungskanal (53) ausgeführt ist, der eine in der Lauffläche (37) ausgebildete, auf dem Radius der Druckanschlüsse (46, 47, 48; 48a) liegende Uebernahmebohrung (55) mit einer im Bereich der Drehachse ausgebildeten Anschlussbohrung (54) verbindet und der je nach der Schwenkstellung der Drehscheibe (36) einen der peripheren Druckanschlüsse (46. 47, 48; 48a) mit einem im Gehäuse (32) angeordneten, im Bereich der Drehachse an die Drehscheibe (36) dichtend anliegenden, dem Ausgang (45) des Ladeventils (30) zugeordneten zentralen Druckanschluss (50) verbindet.

3. Anlage nach Anspruch 2, dadurch gekennzeichnet, dass die Abstände zwischen den peripheren Druckanschlüssen (46, 47, 48; 48a) je mindestens gleich sind dem Durchmesser der in der Drehscheibe (36) ausgebildeten Uebernahmebohrung (50).

4. Anlage nach einem der vorangehenden Ansprüche, dadurch gekennzeichnet, dass die Antriebseinrichtung (34) des Ladeventils (30) einen Asynchronmotor (85) enthält, der mit einer auf seine Welle (86) wirkenden Bremse (87) versehen und über ein Getriebe (88) und eine drehsteife Kupplung (90) mit einer Antriebswelle (33) des Ventilkörpers (31) gekuppelt ist.

5. Anlage nach einem der vorangehenden Ansprüche, dadurch gekennzeichnet, dass die Zuteileinrichtung (23) einen dem Ausgang (50) des Ladeventils (30) zugeordneten zweiten Ventilkörper (60) enthält, der über eine von der Antriebseinrichtung (34) des zyklisch verstellbaren ersten Ventilkörpers (31) unabhängige Stelleinrichtung (66) zwischen einer den Ausgang (50) freigebenden Offenstellung und einer den Ausgang (50) sperrenden Sperrstellung (60') verstellbar ist.

6. Anlage nach Anspruch 5, dadurch gekennzeichnet, dass der zweite Ventilkörper (60) in Form eines Kolbens ausgebildet ist, der im Gehäuse (32) des Ladeventils (31) in einer mit dem Ausgang (50) verbundenen Bohrung (61) dichtend geführt und zwischen einer seiner Durchflussstellung entsprechenden ersten Hubstellung und einer seiner Sperrstellung (61') entsprechenden zweiten Hubstellung verstellbar ist, in welcher er an einen in der Bohrung (61) ausgebildeten Ventilsitz (63) anliegt.

7. Anlage nach Anspruch 6, dadurch gekennzeichnet, dass die Stelleinrichtung (66) des zweiten Ventilkörpers (60) ein Steuerventil (67) mit einem Ventilgehäuse (68) und einem in diesem über einen Anker eines Elektromagneten (69) beweglichen dritten Ventilkörper (70) enthält, wobei das Ventilgehäuse (68) des Steuerventils (67) einen mit einem der Eingänge (42, 43, 44; 44a) des Ladeventils (30) verbundenen Eingang (71), einen mit der den zweiten Ventilkörper (60) enthaltenden Bohrung (61) des Ladeventils (30) verbundenen ersten Ausgang (72) und einen mit einer Abströmleitung (74) verbundenen zweiten Ausgang (73) aufweist und der dritte Ventilkörper (70) zwischen einer bei erregtem Elektromagneten (69) einnehmbaren, den Eingang (71) des Steuerventils (67) verschliessenden ersten Hubstellung und einer bei nicht erregtem Elektromagneten (69) einnehmbaren, diesen Eingang (71) freigebenden zweiten Hubstellung beweglich ist, in welcher der dritte Ventilkörper (70) unter dem Einfluss des im Eingang (42, 43, 44; 44a) des Ladeventils (30) herrschenden Speicherdrucks den zweiten Ausgang (73) des Steuerventils (67) verschliesst, wobei der zweite Ventilkörper (60) des Ladeventils (30) über den ersten Ausgang (72) des Steuerventils (67) durch den im Eingang (42, 43, 44; 44a) des Ladeventils (30) herrschenden Speicherdruck beaufschlagbar und gegen den zugehörigen Ventilsitz (63) bewegbar ist.

8. Anlage nach einem der vorangehenden Ansprüche, mit zwischen den Zwischenspeichern (4, 5, 6) und der Zuteileinrichtung (23) angeordneten, je einem der Eingänge (42, 43, 44; 44a) des Ladeventils (30) zugeordneten Rückschlagventilen (20, 21, 22), dadurch gekennzeichnet, dass die Rückschlagventile (20, 21, 22) im Gehäuse (32) des Ladeventils (30) angeordnet sind.

9. Verfahren zum Betrieb einer Anlage nach einem der vorangehenden Ansprüche, dadurch gekennzeichnet, dass beim Beginn eines Betankungsvorganges der Ventilkörper (31) des Ladeventils (30) über die Antriebseinrichtung (34) jeweils im vorbestimmten Drehsinn (Pfeil 57) aus der ersten Sperrstellung in die dem Zwischenspeicher (4) mit dem niedrigsten Speicherdruck zugeordnete erste Durchflussstellung umgeschaltet wird, beim nach Erreichen eines dem Speicherdruck des angeschlossenen Zwischenspeichers (4 bzw. 5) entsprechenden, im mobilen Druckbehälter und/oder in der Betankungsvorrichtung (7) sich aufbauenden Ladedrucks, der kleiner ist als ein vorbestimmter Wert dieses Ladedrucks, der Ventilkörper (31) im gleichen Drehsinn (Pfeil 57) über mindestens eine weitere Sperrstellung in die dem Zwischenspeicher (5 bzw. 6) mit dem nächsthöheren Speicherdruck zugeordnete Durchflussstellung umgeschaltet wird und dass beim Erreichen des vorbestimmten Werts des Ladedrucks der Ventilkörper (31) im gleichen Drehsinn (Pfeil 57) aus der dem jeweiligen Zwischenspeicher (4, 5, 6) zugeordneten Durchflussstellung in die erste Sperrstellung umgeschaltet wird.

## Claims

1. An appliance for filling a mobile pressure vessel, in particular a vehicle fuel tank, with a gaseous fuel, in particular natural gas, having at least two intermediate stores (4,5,6), wherein fuel can be stored under different storage pressures, and an allocation device (23) through which a filling device (7), which can be coupled to the pressure vessel in a pre-determined sequence beginning with intermediate store (4) having the lowest pressure, can respectively be connected to one of intermediate stores (4,5,6), characterised in that allocation device (23) contains a loading valve (30) which has a housing (32) sealed from the environment, having at least two inlets (42,43 or 44,44a) each joined to one of the intermediate stores (4,5,6), and an outlet (45) joined to filling device (7) likewise a valve body (31) which is cyclically adjustable through a drive device (34), which is held in housing (32) between a seating surface (38) and a bearing arrangement (40) receiving axial forces, and which respectively is switchable in a specific direction of rotation (arrow 57) across a first closed position, closing inlets (42,43,44) into a first flow position, associated with intermediate store (4) having the lowest storage pressure, permitting a connection between the relevant inlet (42) and outlet (45), and in the same direction of rotation (arrow 57) is switchable respectively across a further closed position into a further flow position associated with intermediate store (6) having the next highest storage pressure, likewise in the same direction of rotation, from the flow position associated with the intermediate store having the highest storage pressure into the first closed position.

2. An appliance according to claim 1, characterised in that loading valve (30) as a valve body (31) contains a swivel member in the form of a continuously rotatable rotary disc (36) which is swivel ably supported about an axis of rotation in housing (32) and can be actuated from outside, which has a continuous annular bearing surface (37) to peripheral delivery connections (46,47,48,48a), sealingly abutting with same, arranged in a circle in housing (32), associated with each one of inputs (42,43,44,44a) and which is constructed with a closed connecting channel (53), which connects a takeover bore (55) constructed in bearing surface (37), arranged in the radius of delivery connections (46,47,48,48a), to a connecting bore (54) constructed in the region of the axis of rotation, and which, according to the swivel position of rotary disc (36) , connects one of peripheral delivery connections (46.47.48.48a) to a central delivery connection (50), arranged in housing (32) , sealingly abutting with rotary disc (36) in the region of the axis of rotation, associated with outlet (45) of loading valve (30).

3. An appliance according to claim 2, characterised in that the distances between the peripheral delivery connections (46,47,48,48a) are each at least equal to the diameter of takeover bore (50) constructed in rotary disc (36).

4. An appliance according to any of the previous claims, characterised in that drive device (34) of loading valve (30) contains an asynchronous motor (85) which is provided with a brake (87) acting on its shaft (86), and is coupled with a drive shaft (33) of valve body (31) via a gearing (88) and a coupling (90) which is stiff against torsion.

5. An appliance according to any of the previous claims, characterised in that allocation device (23) contains a second valve body (60) associated with outlet (50) of loading valve (30), which via an adjusting device (66), which is independent of drive device (34) of the cyclically adjustable first valve body (31), can be adjusted between an open position releasing outlet (50) and a closed position (60') closing outlet (50).

6. An appliance according to claim 5, characterised in that the second valve body (60) is constructed in the form of a piston which is sealingly guided in a bore (61) joined to outlet (50) in housing (32) of loading valve (31), and is adjustable between a first stroke position corresponding to its flow position, and a second stroke position corresponding to its closed position (61'), in which it abuts with a valve seat (63) constructed in bore (61).

7. An appliance according to claim 6, characterised in that adjusting device (66) of second valve body (60) contains a control valve (67) with a valve housing (68) and a third valve body (70) movable in same via an armature of an electromagnet (69), whereby valve housing (68) of control valve (67) has an inlet (71) joined to inlets (42,43,44,44a) of loading valve (30), a first outlet (72) joined to bore (61) of loading valve (30), contained in the second valve body (60) and a second outlet (73) joined to a discharge conduit (74),and the third valve body (70) is movable between a first stroke position, which can be occupied on actuating the electromagnet (69) and closing control valve (67) inlet (71), and a second stroke position, which can be occupied on non-actuation of the electromagnet, freeing this inlet (71), in which the third valve body (70), under the influence of the prevailing storage pressure in inlet (42,43,44,44a) of loading valve (30), closes the second outlet (73) of control valve (67), and where the second valve body (60) of loading valve (30) can be acted upon by the prevailing storage pressure in inlet (42,43,44,44a) via the first outlet (72) of control valve (67) and can be moved against the relevant valve seat (63).

8. An appliance according to any of the previous claims, with non-return valves associated with each of inlets (42,43,44,44a) of loading valve (30), arranged between intermediate store (4,5,6) and allocation device (23), characterised in that non-return valves (20,21,22) are arranged in the housing (32) of loading valve (30).

9. A process for operating an appliance in accordance with one of the previous claims, characterised in that at the beginning of a filling process, valve body (31) of loading valve (30) is switched via drive device (34) respectively in the pre-determined direction of rotation (arrow 57) from the first closed position into the flow position associated with intermediate store (4) having the lowest storage pressure, where, after achieving a loading pressure, building up in the mobile pressure vessel and/or filling device (7), corresponding to the storage pressure of the closed intermediate store (4 or 5), which is smaller than a pre-determined value of this loading pressure, valve body (31) is switched in the same direction of rotation (arrow 57) across at least one further closed position into the flow position associated with intermediate store (5 or 6) having the next highest storage pressure, and on achieving the pre-determined value of the loading pressure of valve body (31), is switched in the same direction of rotation (arrow 57) from the flow position associated with the respective intermediate store (4,5,6) into the first closed position.

## Revendications

1. Installation pour ravitailler un récipient sous pression mobile, notamment un réservoir de carburant d'un véhicule, avec un carburant gazeux, notamment du gaz naturel, avec au moins deux réservoirs de stockage intermédiaires (4, 5, 6) dans lesquels le combustible peut être stocké à des pressions de stockage différentes, et avec un dispositif d'attribution (23) par lequel un dispositif de ravitaillement (7) pouvant être accouplé au réservoir sous pression peut être raccordé suivant un ordre prédéterminé, en commençant par le réservoir de stockage intermédiaire (4) présentant la pression de stockage la plus basse, respectivement à l'un des réservoirs de stockage intermédiaires (4, 5, 6) caractérisée en ce que le dispositif d'attribution (23) comporte une vanne de chargement (30) qui présente un boîtier (32) rendu étanche par rapport à l'environnement avec au moins deux entrées (42, 43 et, respectivement 44, 44a) reliées respectivement à l'un des réservoirs de stockage intermédiaires (4, 5, 6) et une sortie (45) reliée au dispositif de ravitaillement (7) ainsi qu'un corps de vanne (31) déplaçable cycliquement par un dispositif d'entraînement (34) qui est retenu dans le boîtier (32) entre une surface de siège (38) et un agencement de pâlier (40) recevant des forces axiales, et qui peut être commuté respectivement dans un sens de rotation déterminé (flèche 57) par une première position de blocage fermant les entrées (42, 43, 44; 44a) en une première position d'écoulement associée au réservoir de stockage intermédiaire (4) ayant la pression de stockage la plus basse, permettant une liaison entre l'entrée concernée (42) et la sortie (45), et dans le même sens de rotation (flèche 57) respectivement par une position de blocage supplémentaire en une position d'écoulement suivante associée au réservoir de stockage intermédiaire (6) ayant la pression de stockage suivante plus élevée ainsi que dans le même sens de rotation de la position d'écoulement associée au réservoir de stockage intermédiaire ayant la pression de stockage la plus élevée dans la première position de blocage.

2. Installation selon la revendication 1, caractérisée en ce que la vanne de chargement (30) comporte en tant que corps de vanne (31) une pièce de pivotement actionnable de l'extérieur, logée de façon pivotante dans le boîtier (32) autour d'un axe de pivotement, sous forme d'un disque tournant (36) pouvant tourner sans fin qui présente une face de roulement annulaire continue (37) vers des prises de pression périphériques (46, 47, 48; 48a) s'appliquant de manière étanche à celle-ci, disposée dans le boîtier (32) sur un cercle, associée respectivement à l'une des entrées (42, 43, 44; 44a) de la vanne de chargement (30), et qui est réalisée avec un canal de liaison fermé (53) qui relie un perçage de reprise (55) réalisé dans la face de roulement (37), reposant sur le rayon des prises de pression (46, 47, 48; 48a) avec un perçage de raccordement (54) réalisé au voisinage de l'axe de rotation, et qui, selon la position de pivotement du disque tournant (36), relie l'une des prises de pression périphériques (46, 47, 48; 48a) à une prise de pression centrale (50) disposée dans le boîtier (32), s'appliquant de manière étanche au voisinage de l'axe de rotation au disque tournant (36), associée à la sortie (45) de la vanne de chargement (30).

3. Installation selon la revendication 2, caractérisée en ce que les écarts entre les prises de pression périphériques (46, 47, 48; 48a) sont respectivement au moins égaux au diamètre du perçage de reprise (50) réalisé dans le disque tournant (36).

4. Installation selon l'une des revendications précédentes, caractérisée en ce que le dispositif d'entraînement (34) de la vanne de chargement (30) comporte un moteur asynchrone (85) qui est pourvu d'un frein (87) agissant sur son arbre (86) et qui est accouplé par un engrenage (88) et un accouplement rigide en torsion (90) à un arbre d'entraînement (33) du corps de vanne (31).

5. Installation selon l'une des revendications précédentes, caractérisée en ce que le dispositif d'attribution (23) comporte un deuxième corps de vanne (60) associé à la sortie (50) de la vanne de chargement (30) qui est déplaçable par un dispositif de positionnement (66) indépendant du dispositif d'entraînement (34) du premier corps de vanne (31) ajustable cycliquement entre une position d'ouverture libérant la sortie (50) et une position de blocage (60') fermant la sortie (50).

6. Installation selon la revendication 5, caractérisée en ce que le deuxième corps de vanne (60) est réalisé sous forme de piston qui est guidé de manière étanche dans le boîtier (32) de la vanne de chargement (31) dans un perçage (61) relié à la sortie (50) et qui est déplaçable entre une première position de course correspondant à sa position d'écoulement et une deuxième position de course correspondant à sa position de blocage (61') où il s'applique à un siège de vanne (63) réalisé dans le perçage (61).

7. Installation selon la revendication 6, caractérisée en ce que le dispositif de positionnement (66) du deuxième corps de vanne (60) comporte une vanne de commande (67) avec un boîtier de vanne (68) et un troisième corps de vanne (70) déplaçable dans celui-ci par un induit d'un électro-aimant (69), le boîtier de vanne (68) de la vanne de commande (67) présentant une entrée (71) reliée à l'une des entrées (42, 43, 44; 44a) de la vanne de chargement (30), une première sortie (72) reliée au perçage (61) de la vanne de chargement (30) comportant le deuxième corps de vanne (60) et une deuxième sortie (73) reliée à un conduit d'écoulement (74), et que le troisième corps de vanne (70) est déplaçable entre une première position de course occupée lorsque l'électro-aimant (69) est excité, fermant l'entrée (71) de la vanne de commande (67) et une deuxième position de course pouvant être occupée lorsque l'électro-aimant (69) n'est pas excité, libérant cette entrée (71), où le troisième corps de vanne (70), sous l'influence de la pression de stockage régnant dans l'entrée (42, 43, 44; 44a) de la vanne de chargement (30) ferme la deuxième sortie (73) de la vanne de commande (67), le deuxième corps (60) de la vanne de chargement (30) pouvant être chargé par la première sortie (72) de la vanne de commande (67) par la pression de stockage régnant dans l'entrée (42, 43, 44; 44a) de la vanne de chargement (30) et déplacé vers le siège de vanne associé (63).

8. Installation selon l'une des revendications précédentes, avec des vannes de retenue (20, 21, 22) disposées entre les réservoirs de stockage intermédiaires (4, 5, 6) et le dispositif d'attribution (23), associées respectivement à l'une des entrées (42, 43, 44; 44a) de la vanne de chargement (30), caractérisée en ce que les vannes de retenue (20, 21, 22) sont disposées dans le boîtier (32) de la vanne de chargement (30).

9. Procédé pour faire fonctionner une installation selon l'une des revendications précédentes, caractérisé en ce que, au début d'une opération de ravitaillement, le corps de vanne (31) de la vanne de chargement (30) est commutée par le dispositif d'entraînement (34) respectivement dans un sens de rotation prédéterminée (flèche 57) de la première position de blocage en une première position d'écoulement associée au réservoir de stockage intermédiaire (4) ayant la pression de stockage la plus basse, après l'atteinte d'une pression de chargement correspondant à la pression de stockage du réservoir de stockage intermédiaire (4 et, respectivement 5) raccordé, s'établissant dans le réservoir sous pression mobile et/ou dans le dispositif de ravitaillement (7), qui est plus petite qu'une valeur prédéterminée de cette pression de chargement, le corps de vanne (31) est commuté dans le même sens de rotation (flèche 57) par au moins une position de blocage supplémentaire dans la position d'écoulement associée au réservoir de stockage intermédiaire (5 et, respectivement 6) ayant la pression de stockage plus élevée suivante, et en ce que lors de l'atteinte de la valeur prédéterminée de la pression de chargement, le corps de vanne (31) est commuté dans le même sens de rotation (flèche 57) de la position d'écoulement associée au réservoir de stockage intermédiaire respectif (4, 5, 6) dans la première position de blocage.
